# EUROPEAN PATENT APPLICATION

(11) **EP 4 822 266 A1**
(43) Date of publication of application: **14.10.2026**
(21) Application number: 23938690.7
(22) Date of filing: 28.12.2023
(51) Int. Cl.: F24H 1/20, F24H 9/00, F24H 9/13, F24H 9/1818, F24H 9/20, F24H 9/16, F24H 15/305, F24H 9/02, B60K 11/02

(54) **WATER HEATER AND VEHICLE**

(30) Priority: 06.12.2023 CN 202311665307
(71) Applicant: Xiaogan Huagong Gaoli Electronics Co., Ltd., Xiaogan, Hubei 432100 (CN)
(72) Inventor: NIE, Bo, Xiaogan, Hubei 432100 (CN); ZOU, Yong, Xiaogan, Hubei 432100 (CN); LI, Sheng, Xiaogan, Hubei 432100 (CN); WU, Qiang, Xiaogan, Hubei 432100 (CN); WANG, Wei, Xiaogan, Hubei 432100 (CN); SUN, Yu, Xiaogan, Hubei 432100 (CN); HU, Shan, Xiaogan, Hubei 432100 (CN)
(74) Representative: Herrero & Asociados, S.L.
(86) International application number: PCT/CN2023/142748
(87) International publication number: WO 2025/118383

(57) **Abstract**

A vehicle is provided, comprising a water heater. The water heater includes a housing, a valve and an actuator; a water inlet, a heating chamber, a valve chamber, a first water outlet and a second water outlet are arranged on the housing; the valve is installed in the valve chamber and divides the valve chamber into a first sub-chamber, a second sub-chamber and a third sub-chamber; the heating chamber is communicated between the water inlet and the first sub-chamber, the first water outlet is communicated with the second sub-chamber, and the second water outlet is communicated with the third sub-chamber; the actuator is connected with the valve, and is used to drive the valve to move to enable the valve to be switched between a first state, a second state and a third state. This allows for the realization of communication between the first, second, and/or third sub-chambers.

## Description

The present application claims the benefit of Chinese Patent Application No. 202311665307.9 , filed on December 6, 2023, titled "Water heater and vehicle", the contents of which are incorporated herein by reference in their entirety.

### Technical field

The application relates to a water heater and a vehicle.

### Background

In the related art, once the coolant of the vehicle water heater flows out from the water outlet of the water heater, it is generally necessary to connect a three-way valve and a plurality of pipes to control the direction of the coolant.

The external three-way valve and numerous pipes take up the layout space of the vehicle, making the structure more complicated, which does not conform to the overall idea of integrated weight reduction of new energy vehicles. Additionally, troubleshooting will be challenging if there are too many pipes.

### Summary of the invention

The present application provides a water heater and a vehicle, aiming at addressing the technical problems of numerous valves and pipelines of the existing vehicle's coolant circuit.

In order to solve the above technical problems, in one aspect, an embodiment of the present application provides a water heater, including:
a housing provided with a water inlet, a heating chamber, a valve chamber, a first water outlet and a second water outlet;
a valve installed in the valve chamber and dividing the valve chamber into a first sub-chamber, a second sub-chamber and a third sub-chamber, and the heating chamber is communicated between the water inlet and the first sub-chamber, the first water outlet is communicated with the second sub-chamber, and the second water outlet is communicated with the third sub-chamber;
an actuator connected with the valve, and the actuator is used to drive the valve to move, enabling the valve to be switched between a first state, a second state and a third state; and
in the first state of the valve, the first sub-chamber is communicated with the second sub-chamber, and the first sub-chamber is isolated from the third sub-chamber; in the second state of the valve, the first sub-chamber is communicated with the third sub-chamber, and the first sub-chamber is isolated from the second sub-chamber; in the third state of the valve, the first sub-chamber is communicated with both the second sub-chamber and the third sub-chamber.

According to the water heater of the embodiment of the application, the heating chamber and the valve chamber are both arranged on the housing, so that the cooling liquid enters the heating chamber via the water inlet to be heated, and then flows straight into the first sub-chamber. The actuator drives the valve to move, so as to control the communication state of the first sub-chamber, the second sub-chamber and the third sub-chamber. The water heater integrates the valve chamber of the three-way valve and the internal flow passage of the heating chamber into a whole. And the actuator is arranged outside the water heater, making the structure more compact, occupying less space, increasing space utilization, and lowering cost of the pipeline.

Optionally, an internal flow passage is formed in the heating chamber, an inlet of the internal flow passage is communicated with the water inlet, and an outlet of the internal flow passage is communicated with the first sub-chamber.

Optionally, the valve includes a flow guide part and a blocking part, and the flow guide part is provided with a flow guide hole communicating with the first sub-chamber; and
in the first state of the valve, the flow guide hole is communicated with the second sub-chamber, and the first sub-chamber and the third sub-chamber are isolated from each other by the blocking part; in the second state of the valve, the flow guide hole is communicated with the third sub-chamber, and the first sub-chamber and the second sub-chamber are isolated from each other by the blocking part; in the third state of the valve, the flow guide hole is communicated with both the second sub-chamber and the third sub-chamber.

Optionally, when the actuator drives the valve to move, a area of a communication port between the flow guide hole and the second sub-chamber and/or the third sub-chamber is also able to be adjusted.

Optionally, the valve is rotatably connected in the valve chamber, and the actuator is used to drive the valve to rotate.

Optionally, the housing includes a main body and a base; the base is connected with the main body, the base and the main body are enclosed to form the heating chamber and the valve chamber; the base is provided with the water inlet, the first water outlet and the second water outlet.

Optionally, the housing further includes a cover plate connected with the main body, and the cover plate and the main body are enclosed to form an installation chamber; and
the water heater also includes an electric control assembly and a heating assembly, and the electric control assembly and the heating assembly are respectively installed in the installation chamber, the heating assembly is electrically connected with the electric control assembly, and the electric control assembly is used to drive the heating assembly to heat a cooling liquid in the heating chamber.

Optionally, the actuator is an electric actuator, the electric actuator is electrically connected with the electric control assembly, and the electric control assembly is also used for enabling the electric actuator to drive the valve to reciprocate between the first state, the second state and the third state.

Optionally, the water heater further includes a sealing ring, and the sealing ring is hermetically connected between the main body and the base.

In another aspect, an embodiment of the application provides a vehicle, including the water heater mentioned above.

### Brief description of drawings

Fig. 1 is a structural schematic diagram of a water heater according to an embodiment of the present application.
Fig. 2 is a schematic diagram of the internal structure of the water heater shown in Fig. 1.
Fig. 3 is a structural schematic diagram of the base and the valve shown in Fig. 1.
Fig. 4 is a schematic structural diagram of the base shown in Fig. 1.
Fig. 5 is a schematic diagram of the valve shown in Fig. 3 in a first state.
Fig. 6 is a schematic diagram of the valve shown in Fig. 3 in a second state.
Fig. 7 is a schematic diagram of the valve shown in Fig. 3 in a third state.

The reference signs in the drawings are as follows.
1. Housing; 11. Water inlet; 12. Heating chamber; 121. Internal flow passage; 13. Valve chamber; 131. First sub-chamber; 132. Second sub-chamber; 133. Third sub-chamber; 14. First water outlet; 15. Second water outlet; 101. Main body; 102. Base; 103. Cover plate;
2. Valve;21. Flow guide part; 211. Flow guide hole; 22. Blocking part;
3. Actuator;
4. Sealing gasket;
5. Heating assembly;
6. Sealing ring.

### Detailed description of disclosed embodiments

In order to make the technical problems, technical solutions and beneficial effects of the present application more clear, the application will be further explained in detail below with reference to the drawings and embodiments. It should be understood that the specific embodiments described here are only used to illustrate the application, rather than to limit the application.

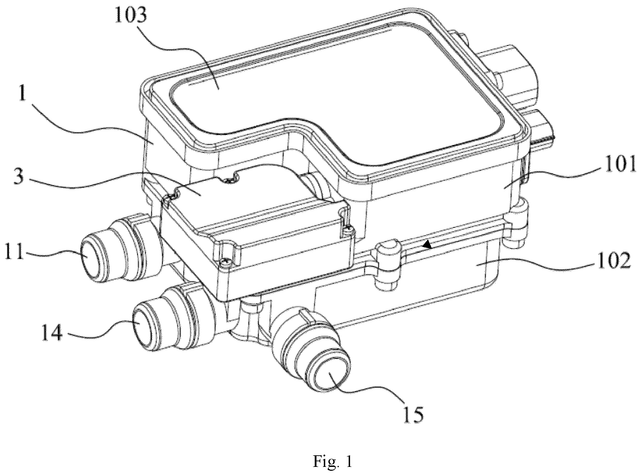

As shown in Fig. 1 to Fig. 7, the water heater provided by the embodiment of the application includes a housing 1, a valve 2 and an actuator 3. The housing 1 is provided with a water inlet 11, a heating chamber 12, a valve chamber 13, a first water outlet 14 and a second water outlet 15; the valve 2 is installed in the valve chamber 13 and dividing the valve chamber 13 into a first sub-chamber 131, a second sub-chamber 132 and a third sub-chamber 133; and the heating chamber 12 is communicated between the water inlet 11 and the first sub-chamber 131, the first water outlet 14 is communicated with the second sub-chamber 132, and the second water outlet 15 is communicated with the third sub-chamber 133.

The actuator 3 is connected with the valve 2, and is used to drive the valve 2 to move, so that the valve 2 can be switched between the first state, the second state and the third state.

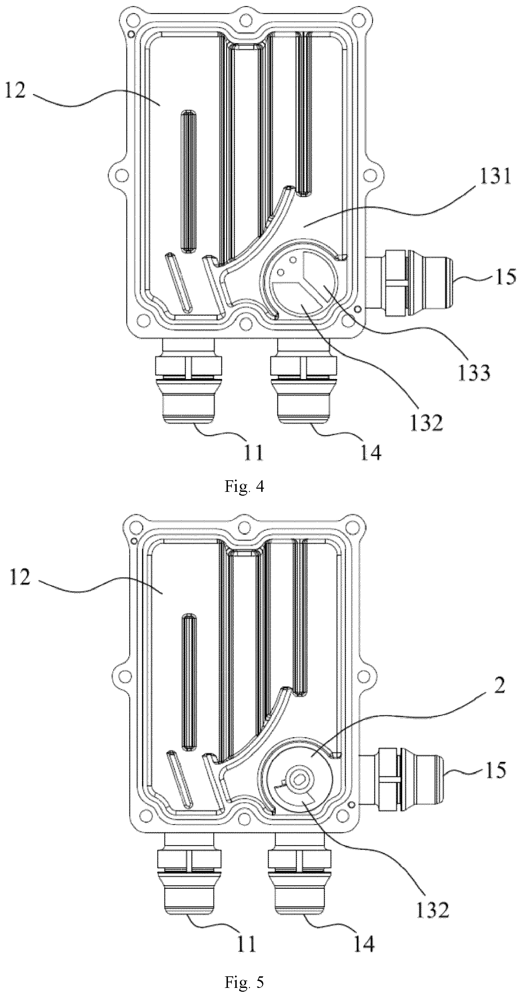

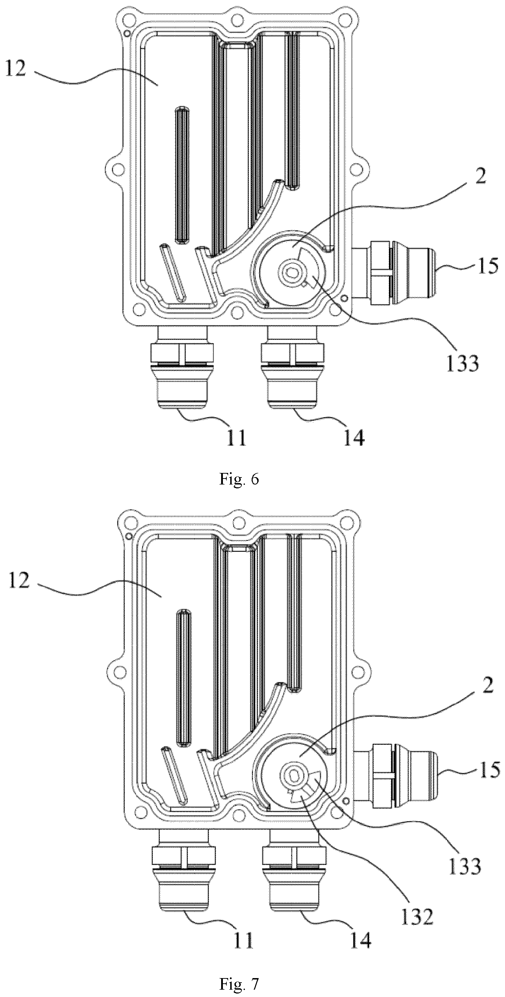

As shown in Fig. 5, in the first state of the valve 2, the first sub-chamber 131 is communicated with the second sub-chamber 132, and the first sub-chamber 131 is isolated from the third sub-chamber 133. As shown in Fig. 6, in the second state of the valve 2, the first sub-chamber 131 is communicated with the third sub-chamber 133, and the first sub-chamber 131 is isolated from the second sub-chamber 132. As shown in Fig. 7, in the third state of the valve 2, the first sub-chamber 131 is communicated with both the second sub-chamber 132 and the third sub-chamber 133.

According to the water heater of the embodiment of the application, the heating chamber 12 and the valve chamber 13 are both arranged on the housing 1, so that the cooling liquid enters the heating chamber 12 via the water inlet 11 to be heated, and then flows straight into the first sub-chamber 131. The actuator 3 drives the valve 2 to move, so as to control the communication state of the first sub-chamber 131, the second sub-chamber 132 and the third sub-chamber 133. The water heater integrates the valve chamber 13 of the three-way valve and the internal flow passage 121 of the heating chamber 12 into a whole. And the actuator 4 is arranged outside the water heater, making the structure more compact, occupying less space, increasing space utilization, and lowering cost of the pipeline.

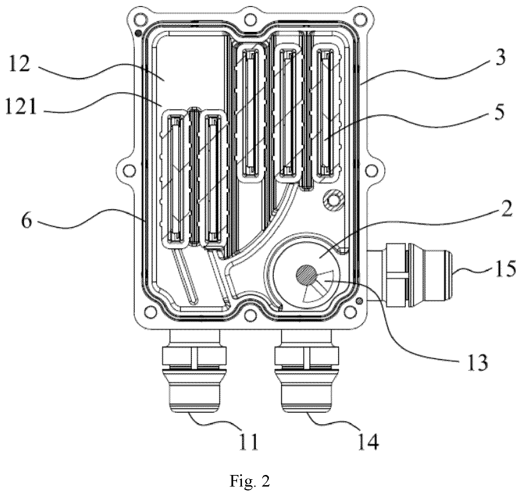

In an embodiment, as shown in Figs. 2 to 7, an internal flow passage 121 is formed in the heating chamber 12, an inlet of the internal flow passage 121 is communicated with the water inlet 11, and an outlet of the internal flow passage 121 is communicated with the first sub-chamber 131. The internal flow passage 121 is used to provide a flow passage for the coolant. Preferably, the internal flow passage 121 is S-shaped.

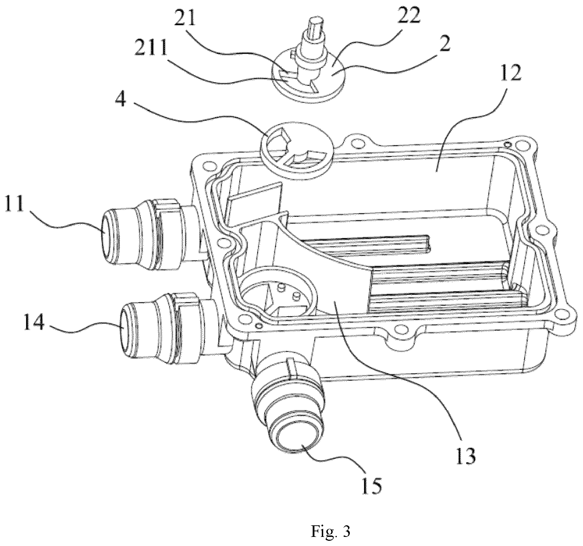

In an embodiment, as shown in Fig. 3, the valve 2 includes a flow guide part 21 and a blocking part 22, and the flow guide part 21 is provided with a flow guide hole 211 communicating with the first sub-chamber 131.

In the first state of the valve 2, the flow guide hole 211 is communicated with the second sub-chamber 132, and the first sub-chamber 131 and the third sub-chamber 133 are isolated from each other by the blocking part 22. In the second state of the valve 2, the flow guide hole 211 is communicated with the third sub-chamber 133, and the first sub-chamber 131 and the second sub-chamber 132 are isolated from each other by the blocking part 22. In the third state of the valve 2, the flow guide hole 211 is communicated with both the second sub-chamber 132 and the third sub-chamber 133.

By controlling the communication between the flow guide hole 211 and the second sub-chamber 132 and/or the third sub-chamber 133, the communication between the first sub-chamber 131 and the second sub-chamber 132 and/or the third sub-chamber 133 can be realized.

In an embodiment, when the actuator 3 drives the valve 2 to move, a area of a communication port between the flow guide hole 211 and the second sub-chamber 132 and/or the third sub-chamber 133 is also able to be adjusted. This allows the flow adjustment of each sub-chamber.

Specifically, in the first state of the valve 2, the actuator 3 can further drive the valve 2 to move, so as to further adjust the area of the communication port between the flow guide hole 211 and the second sub-chamber 132, thereby altering the flow to the second sub-chamber 132.

In the second state of the valve 2, the actuator 3 can further drive the valve 2 to move, so as to further adjust the area of the communication port between the flow guide hole 211 and the third sub-chamber 133, thereby altering the flow to the third sub-chamber 133.

In the third state of the valve 2, the actuator 3 can further drive the valve 2 to move, so as to further adjust the area of the communication port between the flow guide hole 211 and the second sub-chamber 132 and the third sub-chamber 133, thereby altering the flow to the second sub-chamber 132 and the third sub-chamber 133.

In an embodiment, as shown in Figs. 2 to 7, the valve 2 is rotatably connected in the valve chamber 13, and the actuator 3 is used to drive the valve 2 to rotate. This allows the valve 2 to communicate with the second sub-chamber 132 and/or the first sub-chamber 131 through rotation.

In an embodiment, as shown in Fig. 3, a sealing gasket 4 is arranged between the valve 2 and the second sub-chamber 132 and the third sub-chamber 133. The sealing gasket 4 is used for sealing between the valve 2, the second sub-chamber 132 and the third sub-chamber 133. This prevents coolant from leaking between the second sub-chamber 132 and the third sub-chamber 133. Or, this prevent the coolant in the first sub-chamber 131 from entering the second sub-chamber 132 and/or the third sub-chamber 133 via the gap between the valve 2 and the second sub-chamber 132 and the third sub-chamber 133.

In an embodiment, as shown in Fig. 1, the housing 1 includes a main body 101 and a base 102; the base 102 is connected with the main body 101, the base 102 and the main body 101 are enclosed to form the heating chamber 12 and the valve chamber 13; the base 102 is provided with the water inlet 11, the first water outlet 14 and the second water outlet 15. This constitutes the structure of housing 1.

In an embodiment, as shown in Figs. 1 and 2, the housing 1 further includes a cover plate 103 connected with the main body 101, and the cover plate 103 and the main body 101 are enclosed to form an installation chamber.

The water heater also includes an electric control assembly and a heating assembly 5, the electric control assembly and the heating assembly 5 are respectively installed in the installation chamber, the heating assembly 5 is electrically connected with the electric control assembly, and the electric control assembly is used to drive the heating assembly 5 to heat a cooling liquid in the heating chamber 12.

In an embodiment, the actuator 3 is an electric actuator, the electric actuator is electrically connected with the electric control assembly, and the electric control assembly is also used for enabling the electric actuator to drive the valve 2 to reciprocate between the first state, the second state and the third state. This allows the realization of communication between the first sub-chamber 131 and the second sub-chamber 132 and/or the third sub-chamber 133.

In other embodiments not shown in the figures, the actuator may also be a manual actuator.

In an embodiment, the water heater further includes a sealing ring 6, and the sealing ring 6 is hermetically connected between the main body 101 and the base 102. This prevents the coolant in the heating chamber 12 and the valve chamber 13 from overflowing via the gap between the main body 101 and the base 102.

The embodiment of the application also provides a vehicle, including the water heater provided by the above embodiments.

The above are merely the preferred embodiments of this application, and are not intended to limit the application. Any modification, equivalent substitution and improvement made within the spirit and principle of this application shall be included in the protection scope of this application.

## Claims

1. A water heater, comprising:
a housing (1) provided with a water inlet (11), a heating chamber (12), a valve chamber (13), a first water outlet (14) and a second water outlet (15);
a valve (2) installed in the valve chamber (13) and dividing the valve chamber (13) into a first sub-chamber (131), a second sub-chamber (132) and a third sub-chamber (133), wherein the heating chamber (12) is communicated between the water inlet (11) and the first sub-chamber (131), the first water outlet (14) is communicated with the second sub-chamber (132), and the second water outlet (15) is communicated with the third sub-chamber (133);
an actuator (3) connected with the valve (2), wherein the actuator (3) is used to drive the valve (2) to move, enabling the valve (2) to be switched between a first state, a second state and a third state; and
in the first state of the valve (2), the first sub-chamber (131) is communicated with the second sub-chamber (132), and the first sub-chamber (131) is isolated from the third sub-chamber (133); in the second state of the valve (2), the first sub-chamber (131) is communicated with the third sub-chamber (133), and the first sub-chamber (131) is isolated from the second sub-chamber (132); in the third state of the valve (2), the first sub-chamber (131) is communicated with both the second sub-chamber (132) and the third sub-chamber (133).

2. The water heater of claim 1, wherein an internal flow passage (121) is formed in the heating chamber (12), an inlet of the internal flow passage (121) is communicated with the water inlet (11), and an outlet of the internal flow passage (121) is communicated with the first sub-chamber (131).

3. The water heater of claim 1, wherein the valve (2) comprises a flow guide part (21) and a blocking part (22), and the flow guide part (21) is provided with a flow guide hole (211) communicating with the first sub-chamber (131); and
in the first state of the valve (2), the flow guide hole (211) is communicated with the second sub-chamber (132), and the first sub-chamber (131) and the third sub-chamber (133) are isolated from each other by the blocking part (22); in the second state of the valve (2), the flow guide hole (211) is communicated with the third sub-chamber (133), and the first sub-chamber (131) and the second sub-chamber (132) are isolated from each other by the blocking part (22); in the third state of the valve (2), the flow guide hole (211) is communicated with both the second sub-chamber (132) and the third sub-chamber (133).

4. The water heater of claim 3, wherein when the actuator (3) drives the valve (2) to move, a area of a communication port between the flow guide hole (211) and the second sub-chamber (132) and/or the third sub-chamber (133) is also able to be adjusted.

5. The water heater of claim 3, wherein the valve (2) is rotatably connected in the valve chamber (13), and the actuator (3) is used to drive the valve (2) to rotate.

6. The water heater of claim 1, wherein the housing (1) comprises a main body (101) and a base (102); the base (102) is connected with the main body (101), the base (102) and the main body (101) are enclosed to form the heating chamber (12) and the valve chamber (13); the base (102) is provided with the water inlet (11), the first water outlet (14) and the second water outlet (15).

7. The water heater of claim 6, wherein the housing (1) further comprises a cover plate (103) connected with the main body (101), and the cover plate (103) and the main body (101) are enclosed to form an installation chamber; and
the water heater also comprises an electric control assembly and a heating assembly (5), wherein the electric control assembly and the heating assembly (5) are respectively installed in the installation chamber, the heating assembly (5) is electrically connected with the electric control assembly, and the electric control assembly is used to drive the heating assembly (5) to heat a cooling liquid in the heating chamber (12).

8. The water heater of claim 7, wherein the actuator (3) is an electric actuator, the electric actuator is electrically connected with the electric control assembly, and the electric control assembly is also used for enabling the electric actuator to drive the valve (2) to reciprocate between the first state, the second state and the third state.

9. The water heater of claim 6, wherein the water heater further comprises a sealing ring (6), and the sealing ring (6) is hermetically connected between the main body (101) and the base (102).

10. A vehicle, comprising the water heater of any one of claims 1-9.
